(19) **Europäisches Patentamt**

**European Patent Office**

**Office européen des brevets**

(11) **EP 1 067 778 A2**

(12) **EUROPEAN PATENT APPLICATION**

(43) Date of publication:
10.01.2001 Bulletin 2001/02

(51) Int. Cl.⁷: **H04N 5/217**

(21) Application number: **00305498.8**

(22) Date of filing: **29.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.07.1999 JP 19168199**

(71) Applicant:
**VICTOR COMPANY OF JAPAN, LTD.**
**Yokohama-Shi, Kanagawa-Ken (JP)**

(72) Inventor: **Hamada, Koshiro**
**Sagamihara-shi, Kanagawa-ken (JP)**

(74) Representative:
**Butcher, Ian James et al**
**A.A. Thornton & Co.**
**235 High Holborn**
**London WC1V 7LE (GB)**

(54) **Electronic camera and its method of multiple exposure**

(57) An electronic camera comprising a frame memory 6, which stores a digital picture data corresponding to a picture of one frame, and a multiple exposure control circuit 5, which controls multiple exposures. In response to a number of multiple exposures "m", wherein "m" is an integer of being greater than or equal to 2, the frame memory 6 has a memory capacity of "M" bits defined by an equation: $M = (N + k \times nPXL)$, wherein "N" is a necessary capacity in bit for a single exposure, "k" is an integer of satisfying an inequality $2^{k-1} < m \leq 2^k$ and nPXL is a number of pixels in one picture frame. The digital picture data is integrated by the number of multiple exposures "m" with the multiple exposure control circuit 5 and stored in the frame memory 6, and then a value corresponding to each pixel of the picture data obtained by the integration is decreased by a factor of 1/m and outputted.

**EP 1 067 778 A2**

**Description**

BACKGROUND OF THE INVENTION

Field of the Invention:

The present invention relates to an electronic camera, which outputs an optical image of a subject converted into an electronic signal, particularly, relates to an electronic camera having a function of multiple exposures and its method of multiple exposure.

Description of the Related Art:

Such cameras as an electronic still camera of taking a still-picture and a video camera of taking a motion picture are constituted of that a picture signal obtained by an image sensing device is inputted into an automatic gain control (AGC) circuit and the picture signal is inputted into an analog to digital (A/D) converter after a level of the picture signal has been adjusted to an optimum level. Accordingly, in a case that a picture data outputted from an A/D converter is stored in a frame memory, an overflow phenomenon occurs if a multiple exposure is performed with setting a memory capacity of the frame memory to a memory capacity in response to a picture data obtained by a single exposure.

In order to solve the above-mentioned problem, a method of decreasing an output level of an image sensing device by stopping down light intensity in an optical system or by shortening one exposure time is conceivable. However, a signal to noise ratio (S/N) of a signal outputted from the image sensing device is deteriorated by this method and there existed another problem that picture quality of a picture obtained finally is degraded. Another method of that an already accumulated data and a newly accumulating data are divided into two and then they are added while accumulating a picture data is also conceivable. However, there existed a further problem that information about a picture data accumulated first becomes $1/2^{m-1}$, wherein "m" is a number of multiple exposures and is an integer of being greater than or equal to 2.

SUMMARY OF THE INVENTION

Accordingly, in consideration of the above-mentioned problems of the prior art, an object of the present invention is to provide an electronic camera, which can obtain a multi-exposed picture in proper exposure without deteriorating a signal to noise ratio (S/N) of output of an image sensing device or overflowing a memory capacity, with balancing picture information obtained at each exposure during a multiple exposure process.

In order to achieve the above object, the present invention provides, according to an aspect thereof, an electronic camera, which can perform multiple exposures, comprising image sensing means for outputting an optical image of a subject after converting the optical image into an electric signal; analog to digital converting means for converting a picture signal obtained by the image sensing means into a digital picture data; and memory means for storing the digital picture data corresponding to a picture of one frame, the electronic camera is further characterized by that the memory means has a memory capacity of "M" bits defined by an equation mentioned below in response to a number of multiple exposures "m", wherein the "m" is an integer of being greater than or equal to 2, and that the digital picture data is integrated by the number of multiple exposures "m" and stored in the memory means, and that a value corresponding to each pixel of the picture data obtained by the integration is decreased by a factor of 1/m and outputted: $M = (N + k \times nPXL)$, where "N" is a necessary capacity in bit for a single exposure, "k" is an integer of satisfying an inequality $2^{k-1} < m \leq 2^k$ and nPXL is a number of pixels in one picture frame.

According to an aspect of the present invention, there provided a method of multiple exposure of an electronic camera comprising steps of outputting an optical image of a subject after converting the optical image into an electric signal; converting a picture signal in analog obtained in the step of outputting into a digital picture data; and storing the digital picture data corresponding to a picture of one frame in memory means, wherein the memory means has a memory capacity of "M" bits defined by an equation mentioned below in response to a number of multiple exposures "m", wherein the "m" is an integer of being greater than or equal to 2, and wherein the digital picture data is integrated by the number of multiple exposures "m" and stored in the memory means, and wherein a value corresponding to each pixel of the picture data obtained by the integration is decreased by a factor of 1/m and outputted: $M = (N + k \times nPXL)$, where "N" is a necessary capacity in bit for a single exposure, "k" is an integer of satisfying an inequality $2^{k-1} < m \leq 2^k$ and nPXL is a number of pixels in one picture frame.

Other object and further features of the present invention will be apparent from the following detailed description when read in conjunction with the accompanying drawings.

BRIEF DESCRIPTION OF DRAWINGS

     Fig. 1 shows a block diagram of an electronic camera according to an embodiment of the present invention.
     Fig. 2 shows a block diagram of an electronic camera depicting a control function during multiple exposure according to the embodiment of the present invention.

Fig. 3 shows a flow chart of processing steps during multiple exposure according to the embodiment of the present invention.

## DETAILED DESCRIPTION OF THE PREFERRED EMBODIMENTS

[Embodiment]

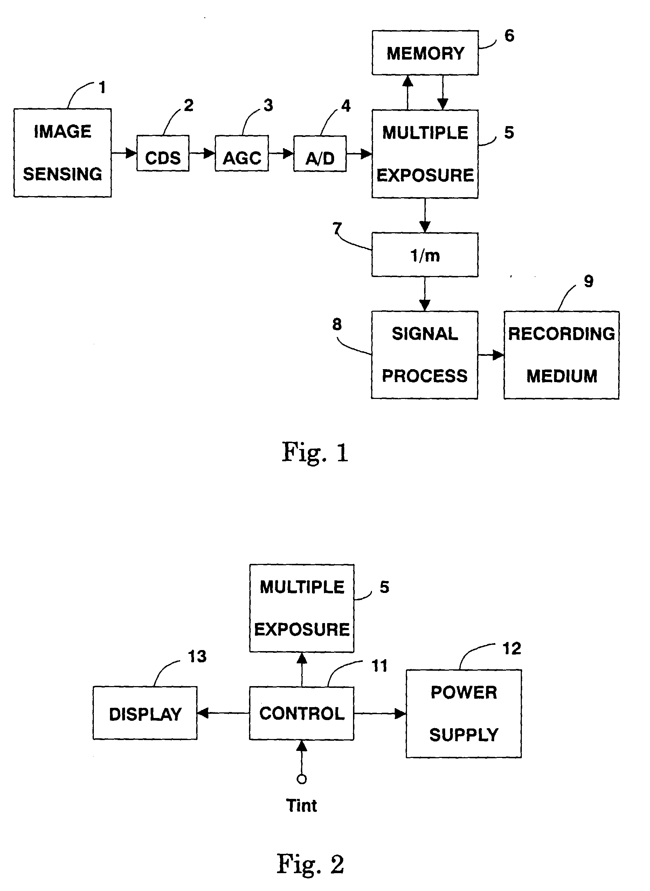

Fig. 1 is a block diagram of an electronic camera according to an embodiment of the present invention.

In Fig. 1, an electronic camera comprises an image sensing device 1, a correlation double sampling (CDS) circuit 2, an automatic gain control (AGC) circuit 3, an analog to digital (A/D) converter circuit 4, a multiple exposure control circuit 5, a frame memory 6, a divider circuit 7, a signal processing circuit 8 and a recording medium 9.

The image sensing device 1 converts an optical image of a subject, which is obtained by an optical system not shown, into an electric signal. The CDS circuit 2 eliminates a readout clock from an output signal of the image sensing device 1. The AGC circuit 3 maintains a signal level at constant level. The A/D converter circuit 4 converts an output signal from the AGC circuit 3 into a digital signal, wherein a digital signal is hereinafter called a picture data. The frame memory 6 stores a picture data of one picture frame. The multiple exposure control circuit 5 controls to add a picture data stored in the frame memory 6 and a new picture data to be inputted and to store them in the frame memory 6 when performing a multiple exposure process. The divider circuit 7 divides a value in response to each pixel of a signal read out from the frame memory 6 through the multiple exposure control circuit 5 by a number of exposures "m". The signal processing circuit 8 generates a luminance signal and a color-difference signal from an output signal of the divider 7 and records them in the recording medium 9 through an information compression process.

The frame memory 6 has a memory capacity of "M" bits, which is expressed by an equation (1) below in response to a number of exposures "m", wherein the "m" is an integer of being greater than or equal to 2.

$M = (N + k \times nPXL)$    (1) , where "N" is a necessary capacity for a single exposure in bit, "k" is an integer of satisfying an inequality $2^{k-1} < m \leq 2^k$ and nPXL is a number of pixels in one picture frame.

Generally, a data of integrating "m" times a data of "n" bits multiplied by a data of "n" bits becomes a data of $(n + k)$ bits, wherein the "k" satisfies the inequality $2^{k-1} < m \leq 2^k$. In the equation (1) above, the capacity "N" is equivalent to "$n \times nPXL$". The frame memory 6 can store a picture data of integrated "m" times without overflowing by setting the memory capacity of the frame memory 6 to a capacity "M", which is a sum of the capacity "N" and ($k \times nPXL$).

The multiple exposure control circuit 5 performs a process of integrating a picture data outputted from the A/D converter circuit 4 by a number of multiple exposures "m" at each pixel. In other words, at a first exposure, that is, when a picture data is taken in, the multiple exposure control circuit 5 makes the frame memory 6 store the picture data as it is. At a second and succeeding exposures, the multiple exposure control circuit 5 processes to add a picture data read out from the frame memory 6 to another picture data outputted from the A/D converter circuit 4 pixel by pixel and to store the added picture data in the frame memory 6 once again.

When "m" times exposures are completed, a picture data is read out from the frame memory 6 through the multiple exposure control circuit 5. A picture data value of each pixel is divided by "m" by the divider circuit 7 and the divided picture data is supplied to the signal processing circuit 8. A picture data supplied to the signal processing circuit 8 is averaged by equally weighting picture data obtained by "m" times exposures, that is, obtained by taking in data "m" times. Accordingly, an information of a picture taken in first will not be decreased extremely. Further, a process such as stopping down light intensity is not performed, so that a multi-exposed still picture data having an excellent signal to noise ratio (S/N) can be obtained.

The picture data inputted to the signal processing circuit 8 is converted into a luminance signal and a color-difference signal and recorded in the recording medium 9 after an information compression process is applied. A semiconductor memory and a magnetic memory are utilized for the recording medium 9.

Fig. 2 shows a block diagram of an electronic camera depicting a control function during multiple exposure according to the embodiment of the present invention.

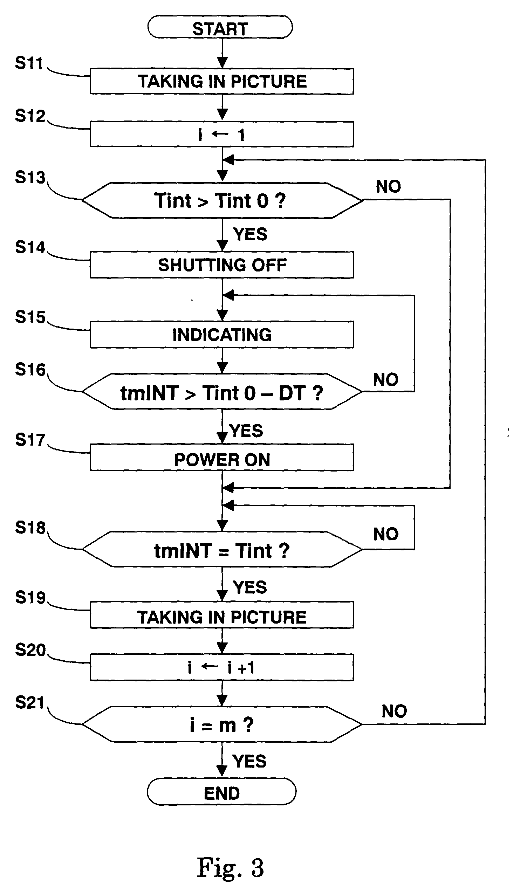

Fig. 3 shows a flow chart of processing steps during multiple exposure according to the embodiment of the present invention.

In Fig. 2, a control section 11 is composed of a micro computer and controls the multiple exposure control circuit 5, a power supply section 12 and a display section 13 in accordance with processing steps shown in Fig. 3. An interval "Tint" of multiple exposure, that is, an interval "Tint" between each exposure is inputted by a user through an operation section not shown in the control section 11.

With referring to Fig. 3, a picture data is taken in first, that is, a first time exposure is performed (step S11) when a multiple exposure is started. A counting number "i" of a counter, which counts a number of exposures, is set to "1" (step S12). The interval "Tint" is judged whether or not the "Tint" is longer than a predetermined interval "Tint0" (step S13). In a case of "Tint ≦ Tint0", the process is forwarded to a step S18.

In a case of "Tint > Tint 0" in the step S13, while power is continuously supplied to minimum necessary circuits, power supply to other circuits is shut off so as to save power consumption (step S14) and the display section 13 indicates that it is in a standby mode for multiple exposure (step S15). The standby mode continues until an indication of count-up timer "tmINT", which counts a lapse of time after a preceding picture data is taken in, exceeds a time of subtracting a time allowance "DT" from the interval "Tint" (step S16), wherein the time allowance "DT" is defined as a time duration from a time when power is resupplied to a time when a circuit status becomes stable. Accordingly, with resupplying power prior to taking in a succeeding picture data mentioned above, functions such as automatic white balancing and automatic focusing can be prevented from shifting when the picture data is taken in.

In the step S16, if the lapse of time is "tmINT > Tint - DT", power is resupplied to the other circuits of which power is shut off in the step S14 (step S17). The other circuits keep in a standby mode and the process repeats until the interval "Tint" lapses after a preceding picture data is taken in (step S18). A succeeding picture data is taken in, that is, a succeeding picture is exposed when the interval "Tint" lapses (step S19) and the counting number "i" of the counter is advanced with an increment of 1 (step S20). The process returns back to the step S13 until the counting number "i" of the counter becomes the number of exposures "m". The process comes to end when the counting number "i" of the counter becomes "m" (step S21). If the lapse of time is "tmINT ≦ Tint - DT" in the step S16, the process returns back to the step S15.

Accordingly, unnecessary power supply is shut off during a standby mode by the process shown in Fig. 3 if the interval "Tint" of multiple exposure is longer than the predetermined time "Tint0", so that power consumption can be reduced. Further, a user can discriminate a case such that a power supply shall be shut off due to a lack of battery capacity from other cases by displaying that it is in a standby mode for multiple exposure in the display section 13. Furthermore, since power is resupplied a little earlier than a time when the interval "Tint" lapses, functions of automatic white balancing and automatic focusing can be prevented from shifting.

While the invention has been described above with reference to specific embodiment thereof, it is apparent that many changes, modifications and variations in the arrangement of equipment and devices and in materials can be made without departing from the invention concept disclosed herein. For example, an electronic camera having a function of taking not only a still picture but also a moving picture can be acceptable.

As mentioned above, according to the present invention, a memory device of storing a digital picture data in response to a picture of one frame has "M" bits of memory capacity, which is represented by $M = (N + k \times nPXL)$, wherein N is a necessary capacity in bit for a single exposure, "k" is an integer of satisfying an inequality $2^{k-1} < m \leqq 2^k$ and nPXL is a number of pixels in one picture frame, in accordance with a number of multiple exposures "m", wherein "m" is an integer of being greater than or equal to 2. Accordingly, the memory device can integrate all information of digital picture data obtained by "m" times exposures without losing any information and can contain them. Further, values in response to each pixel of the picture data obtained by the integration are outputted after being decreased by a factor of 1/m, so that a multi-exposed picture in optimum exposure can be obtained with balancing a picture information obtained at each exposure of multiple exposures without decreasing S/N of output of an image sensing device or without overflowing of a memory capacity.

## Claims

1. An electronic camera, which can perform multiple exposures, comprising:

   image sensing means for outputting an optical image of a subject after converting the optical image into an electric signal;
   analog to digital converting means for converting a picture signal obtained by said image sensing means into a digital picture data; and
   memory means for storing the digital picture data corresponding to a picture of one frame,
   said electronic camera is further characterized by that said memory means has a memory capacity of "M" bits defined by an equation mentioned below in response to a number of multiple exposures "m", wherein the "m" is an integer of being greater than or equal to 2, and that the digital picture data is integrated by the number of multiple exposures "m" and stored in said memory means, and that a value corresponding to each pixel of the picture data obtained by the integration is decreased by a factor of 1/m and outputted:
   $M = (N + k \times nPXL)$, where "N" is a necessary capacity in bit for a single exposure, "k" is an integer of satisfying an inequality $2^{k-1} < m \leqq 2^k$ and nPXL is a number of pixels in one picture frame.

2. A method of multiple exposure of an electronic camera comprising steps of:

   outputting an optical image of a subject after converting the optical image into an electric signal;
   converting a picture signal in analog obtained in the step of outputting into a digital picture data; and
   storing the digital picture data corresponding to a picture of one frame in memory means,

wherein said memory means has a memory capacity of "M" bits defined by an equation mentioned below in response to a number of multiple exposures "m", wherein the "m" is an integer of being greater than or equal to 2, and wherein the digital picture data is integrated by the number of multiple exposures "m" and stored in said memory means, and wherein a value corresponding to each pixel of the picture data obtained by the integration is decreased by a factor of 1/m and outputted:

$M = (N + k \times nPXL)$, where "N" is a necessary capacity in bit for a single exposure, "k" is an integer of satisfying an inequality $2^{k-1} < m \leqq 2^k$ and nPXL is a number of pixels in one picture frame.

Fig. 1

Fig. 2

Fig. 3